# EUROPÄISCHE PATENTANMELDUNG

(11) **EP 3 051 311 A1**
(43) Veröffentlichungstag der Anmeldung: **03.08.2016**
(21) Anmeldenummer: 16150718.1
(22) Anmeldetag: 11.01.2016
(51) Int. Cl.: G01S 17/42, B60Q 1/08, G01S 17/93, G01S 7/481, G01S 13/93

(54) **FAHRERASSISTENZSYSTEM UND VERFAHREN ZUM BETRIEB EINES SOLCHEN SOWIE KRAFTFAHRZEUG DAMIT**

(30) Priorität: 29.01.2015 DE 102015101268
(71) Anmelder: Valeo Schalter und Sensoren GmbH, 74321 Bietigheim-Bissingen (DE)
(72) Erfinder: Simon, Jan, 74321 Bietigheim-Bissingen (DE)

(57) **Zusammenfassung**

Die Erfindung betrifft ein Fahrerassistenzsystem für Kraftfahrzeuge (1) zur Umsetzung einer solchen Assistenzfunktion, welche auf die Detektion von Hindernissen, die den Fahrweg des Kraftfahrzeugs (1) überspannen, bezogen ist. Dabei ermittelt eine Sensorik Detektionsinformationen über Hindernisse im Detektionsbereich oberhalb der Sensorik und eine Aktorik führt die Assistenzfunktion in Abhängigkeit der Detektionsinformation der Sensorik aus. Die Erfindung betrifft außerdem ein Verfahren zum Betrieb eines solchen Fahrerassistenzsystems.

Um die Umsetzung einer Assistenzfunktion zu verbessern, welche auf die Detektion von Hindernissen bezogen ist, die den Fahrweg eines Kraftfahrzeugs (1) überspannen, ist erfindungsgemäß vorgesehen, dass die Sensorik ihr Umfeld beleuchtet und mittels eins mehrkanaligen Empfangssensors (6) mit mehreren horizontal aufgereihten Empfangskanälen jeweiliger optoelektronischer Detektoren, welche jeweils mit ihrem optischen Öffnungswinkel einen Teil (12) des gesamten Sichtfelds (7) des Empfangssensors (6) erfassen, an Objekten (5) reflektiertes Licht empfängt und die Detektoren jeweils eine der empfangenen Rückstreuung entsprechende Empfangsinformation bereitstellen. Eine Auswertungseinheit ermittelt aus den Empfangsinformationen der Detektoren dreidimensionale Informationen und stellt diese der Aktorik bereit.

## Beschreibung

Die Erfindung betrifft ein Verfahren zum Betrieb eines Fahrerassistenzsystems zur Umsetzung einer solchen Assistenzfunktion, welche auf die Detektion von Hindernissen bezogen ist, die den Fahrweg eines Kraftfahrzeugs überspannen, gemäß dem Oberbegriff des Anspruchs 1. Außerdem betrifft die Erfindung ein Fahrerassistenzsystem für Kraftfahrzeuge zur Umsetzung vorgenannten Assistenzfunktion gemäß dem Oberbegriff des Anspruchs 6. Schließlich betrifft die Erfindung gemäß Anspruch 9 ein Kraftfahrzeug mit einem solchen Fahrerassistenzsystem.

Fahrerassistenzsysteme sind Zusatzeinrichtungen für Kraftfahrzeuge zur Unterstützung des Fahrers. Grundsätzlich ist allen Fahrerassistenzsystemen gemeinsam, dass ihr Assistenzziel in der Deckung eines bestimmten Assistenzbedarfs des Fahrers liegt. Dieser Assistenzbedarf kann ganz unterschiedlicher Art sein, beispielsweise in der Unterstützung in gefährlichen Situationen liegen, oder in der Verbesserung des Komforts bei der Durchführung wiederkehrender Manöver, beispielsweise beim Einparken. Andere Fahrerassistenzsysteme wiederum dienen der Überwindung der Leistungsgrenzen der menschlichen Wahrnehmung, beispielsweise Sichtverbesserungssysteme. Fahrerassistenzsysteme erreichen ihre jeweiligen Assistenzziele mittels einer bestimmten Assistenzfunktion, deren Umsetzung eine entsprechende Sensorik und Aktorik bedingt.

Bei Fahrzeugen mit nach oben öffnenden Klappen, insbesondere Heckklappen, beziehungsweise Kofferraumklappen, kann es bei einer Fahrzeugbewegung mit geöffneter Klappe bei der Durchfahrt unter Hindernissen zu einer Kollision kommen, wobei die Klappe beschädigt werden kann. Typische durchfahrbare Hindernisse sind beispielsweise Garagendecken oder Parkhausdecken, wobei das Fahrzeug mit langsamer Geschwindigkeit unter dem Hindernis bewegt wird. Die Assistenzfunktion besteht daher darin, derartige Hindernisse zu erkennen und bei Detektionen einer Kollisionsgefahr die Aktorik entsprechend anzusteuern.

DE 10 2004 040 399 A1 offenbart ein Türsystem für Kraftfahrzeuge mit einem Umgebungssensor zum Erfassen eines Hindernisses in einer Umgebung des Kraftfahrzeugs und einem Türsensor zur Ausgabe eines von der Einleitung eines Öffnens der Tür abhängigen Ausgangssignals. Das bekannte Türsystem umfasst außerdem eine Steuerung zum Erkennen einer drohenden Kollision zwischen der Tür und dem Hindernis in Abhängigkeit des Ausgangssignals des Umgebungssensors. Die Steuerung ist zu einer derartigen Ansteuerung einer Warnvorrichtung ausgebildet, dass mittels der Warnvorrichtung eine Warnung bei Erkennung einer drohenden Kollision zwischen der Tür und dem Hindernis ausgebbar ist. Das bekannte Türsystem zur Kollisionsvermeidung zwischen den Türen eines Kraftfahrzeugs und einem Hindernis bezieht auch die Heckklappe mit ein, wobei mittels der Steuerung, die ein Ausgangssignal des Umgebungssensors auswertet, eine durch ein Öffnen der Heckklappe drohende Kollision zwischen der Heckklappe und einem Hindernis in einer Umgebung oberhalb des Kraftfahrzeugs vermieden werden soll. Der Umgebungssensor zur Erfassung von Hindernissen oberhalb des Kraftfahrzeugs ist auf dem Dach des Kraftfahrzeugs angeordnet und ist als Ultraschallsensor ausgestaltet. Die Wiederholrate des bekannten Systems ist jedoch zu gering, um genaue Detektionsinformationen mit hoher Auflösung für anspruchsvolle Fahrerassistenzsysteme bereitzustellen. Insbesondere ist bei Ultraschallsensoren die Wiederholrate durch die erforderliche Ausschwingzeit der Membran der Ultraschallsensoren beschränkt.

Der vorliegenden Erfindung liegt die Aufgabe zugrunde, die Umsetzung einer solchen Assistenzfunktion, welche auf die Detektion von Hindernissen bezogen ist, die den Fahrweg eines Kraftfahrzeugs überspannen, zu verbessern. Mit einem Überspannen des Fahrwegs ist dabei gemeint, dass unter dem Hindernis ein Raum verbleibt, wie beispielsweise bei den Decken eines Gebäudes wie Garagen und dergleichen.

Diese Aufgabe wird erfindungsgemäß durch ein Verfahren zum Betrieb eines Fahrerassistenzsystems mit den Merkmalen des Anspruchs 1 sowie durch ein Fahrerassistenzsystem für Kraftfahrzeuge mit den Merkmalen des Anspruchs 6 gelöst. Außerdem wird die Aufgabe durch ein Kraftfahrzeug mit einem solchen Fahrerassistenzsystem gemäß Anspruch 9 gelöst.

Erfindungsgemäß umfasst die Sensorik des Fahrerassistenzsystems ein Leuchtmittel sowie einen mehrkanaligen Empfangssensor mit mehreren horizontal aufgereihten Empfangskanälen jeweiliger optoelektronischer Detektoren. Die Sensorik beleuchtet dabei das über ihr und damit auch über dem Kraftfahrzeug liegende Umfeld, wobei die optoelektronischen Detektoren mit ihren jeweiligen Empfangskanälen, welche horizontal aufgereiht sind, an Objekten reflektiertes Licht empfangen und eine der empfangenen Rückstreuung entsprechende Empfangsinformation bereit stellen. Die Empfangskanäle der jeweiligen optoelektronischen Detektoren erfassen dabei jeweils mit ihrem optischen Öffnungswinkel im Azimut einer nicht horizontalen Ebene der Reihe, in der sie angeordnet sind, einen Teil des gesamten Sichtfelds des Empfangssensors. Eine Auswertungseinheit ermittelt aus den Empfangsinformationen der Detektoren dreidimensionale Detektionsinformationen zu dem detektierten Objekt, welche der Aktorik bereitgestellt wird.

Die Erfindung nutzt zur Umsetzung der Assistenzfunktion, nämlich der Detektion von dem Fahrweg des Kraftfahrzeugs überspannenden Hindernissen, eine auch als "LEDDAR" ("Light-emitting diode detection and ranging") bezeichnete Technologie, bei der durch Analyse der Empfangssignale mehrere Detektoren dreidimensionale Lageinformationen über Objekte im gesamten beleuchteten Umfeld ermittelbar sind. Dabei werden die durch Rückstreuung zurücklaufenden Lichtwellen mit entsprechenden Algorithmen analysiert, wobei eine dreidimensionale Information über Objekte im Erfassungsbereich des mehrkanaligen Empfangssensors ermittelt werden können. Die Detektion erfolgt dabei auf der Grundlage der Lichtlaufzeitmessung oder unter Heranziehung der Phasenverschiebung. Eine vergleichbare Analyse der Empfangssignale eines mehrkanaligen Detektors wurde in US 8,242,476 B2 in stationären Einrichtungen zur Erfassung des Straßenverkehrs in einer Anordnung über der Straße vorgeschlagen, beispielsweise in einer Lichtzeichenanlage. Diese Technologienimmt die Erfindung zur Verwendung für Fahrerassistenzsysteme zur Umsetzung einer auf die Detektion von Hindernissen, welche den Fahrweg eines Kraftfahrzeugs überspannen, bezogenen Assistenzfunktion in Bezug.

Jeder Detektor des Empfangssensors stellt mit seinem jeweiligen Empfangskanal ein Teilsichtfeld entsprechend seinem optischen Öffnungswinkel bereit, wobei der Öffnungswinkel durch eine geeignete Optik wunschgemäß eingestellt werden kann. Der Öffnungswinkel kann dabei je nach Genauigkeitsbedarf zwischen 10° und 90° bestimmt sein, wobei sich mehr oder weniger große auswirkbare Überschneidungsbereiche der Teilsichtfelder ergeben. Der Öffnungswinkel ist ein Azimutwinkel bezogen auf eine nicht horizontale, nämlich beispielsweise vertikale, Ebene, welche durch die Reihe der Empfangskanäle bestimmt ist. Der optische Öffnungswinkel in Elevationsrichtung dieser Ebene beträgt etwa 1°bis 3°. Das Sichtfeld der Sen sorik des Fahrerassistenzsystems ist somit ein multiples Sichtfeld entsprechend der Mehrzahl der Empfangskanäle, welche das an Objekten reflektierte Licht über Rückstreuung erfassen.

Die Erfindung hat erkannt, dass mit Hilfe der "LEDDAR"-Technologie hohe Auflösungen und hohe Genauigkeit der Detektionsinformation erreichbar sind, mit denen bei der Detektion von Hindernissen, welche den Fahrweg eines Kraftfahrzeugs überspannen, optimale Ergebnisse erreichbar sind. Die Empfangsinformationen der mehreren Empfangskanäle der Sensorik können sehr rasch kompiliert werden, beispielsweise mehrere tausend Mal pro Sekunde, wodurch sehr genaue dreidimensionale Detektionsinformationen bereitgestellt werden können. Mit einem kleinen optischen Öffnungswinkel in Elevationsrichtung von beispielsweise 1°bis 3°können durch die sehr rasche Kompilierung und damit hohe Auflösung und Wiederholrate sehr genaue Detektionsergebnisse bereitgestellt werden.

Gemäß einem Aspekt der Erfindung wird das Verfahren zum Betrieb eines Fahrerassistenzsystems beziehungsweise das Fahrerassistenzsystem für ein Heckklappensystem eines Kraftfahrzeugs verwendet. Dabei werden die dreidimensionalen Detektionsinformationen des Fahrerassistenzsystems dem Heckklappensystem zur Verfügung gestellt, welches beispielsweise den maximalen Öffnungswinkel der Heckklappe begrenzt. Auf diese Weise ist ausgeschlossen, dass in engen Situationen, wie beispielsweise in Parkhäusern oder in einer Garage, wobei eine Decke das Kraftfahrzeug überspannt, die Heckklappe so weit geöffnet wird, dass eine Beschädigung der Heckklappe durch eine niedrige Deckenhöhe eintritt.

In einer weiteren erfindungsgemäßen Verwendung werden die Detektionsinformationen der mehrkanaligen Sensorik für die Ansteuerung einer Fahrzeugbeleuchtung eines Kraftfahrzeugs herangezogen. Das Fahrerassistenzsystem detektiert beispielsweise Tunneleinfahrten, welche den Fahrweg des Kraftfahrzeugs überspannen und teilt derartige Detektionsergebnisse der Ansteuerung der Fahrzeugbeleuchtung mit, so dass die Fahrzeugbeleuchtung optimal eingestellt werden kann. Die Ansteuerung der Fahrzeugbeleuchtung ist dabei Bestandteil der Aktorik des Fahrerassistenzsystems. Anders ausgedrückt wird das erfindungsgemäße Fahrerassistenz zur Unterstützung eines Lichtsensors des Beleuchtungssystems eines Fahrzeugs herangezogen, so dass bevorstehende Verdunklungen und damit eintretender Beleuchtungsbedarf bei Tunnelfahrten bereits frühzeitig detektiert werden.

In einer vorteilhaften Ausführungsform weist die Sensorik eine Leuchtdiode als Leuchtmittel auf. Mittels Leuchtdioden ist eine umfassende Beleuchtung des zu detektierenden Umfelds möglich.

Bei einem Kraftfahrzeug ist die Sensorik derart angeordnet, dass die horizontal aufgereihten Empfangskanäle ein nach oben gerichtetes Sichtfeld des Empfangssensors bilden. Auf diese Weise detektiert der mehrkanalige Empfangssensor ein Sichtfeld über der Sensorik und damit dem Kraftfahrzeug. Der Empfangssensor wird während der Fahrt des Kraftfahrzeugs mit dem Kraftfahrzeug bewegt, wobei ständig mit hoher Auflösung Aktualisierungen der Detektionsinformation durchgeführt werden.

In einer vorteilhaften Ausführungsform der Erfindung ist eine Sensorik mit sechzehn Empfangskanälen vorgesehen. Derartige Sensoreinheiten sind bereits konfiguriert und mit einer abgestimmten Elektronik verfügbar, so dass eine für die Ausführung der Erfindung geeignete Sensoreinheit mit geringem Aufwand beschafft werden kann.

Vorteilhaft wird aus den Empfangsinformationen der Empfangskanäle der horizontale Abstand und der vertikale Abstand eines Objekts als dreidimensionale Detektionsinformation ermittelt. Der horizontale Abstand ist dabei eine Entfernung des Objekts in Richtung einer Fahrtebene des Kraftfahrzeugs. Der vertikale Abstand des Objekts ist dabei eine Entfernung in vertikaler Richtung bezogen auf diese Fahrtebene. Insbesondere die Information zum vertikalen Abstand wird bei einer Verwendung der Erfindung zur Unterstützung eines Heckklappensystems vom Heckklappensystem dahingehend herangezogen, einen Vergleich des aktuellen Öffnungswinkels und der damit eingenommenen Höhe der Heckklappe mit den aktuellen Informationen zum vertikalen Abstand zu vergleichen. Der vertikale Abstand entspricht dabei der maximalen Durchfahrtshöhe am Hindernis, so dass bei zu weit geöffneter Heckklappe, das heißt zu großem Öffnungswinkel der Heckklappe, eine Warnung erfolgt. In anderen Ausführungsformen der Erfindung wird die Information zum vertikalen Abstand herangezogen, um den maximalen Öffnungswinkel der nach oben öffnenden Heckklappe des Kraftfahrzeugs zu ermitteln und die Mögliche Öffnungsbewegung der Heckklappe zur Vermeidung von Kollisionen zu begrenzen.

Gemäß einer vorteilhaften Ausführungsform der Erfindung wird die Sensorik des Fahrerassistenzsystems in Abhängigkeit einer vorgegebenen Geschwindigkeit des Kraftfahrzeugs oder bei Eintritt eines bestimmten Ereignisses aktiviert. Hierzu wird der Elektronik des Fahrerassistenzsystems, beispielsweise der Auswertungseinheit oder einer Steuereinheit, an welche die Sensorik und die Aktorik angeschlossen sind, eine entsprechende Aktivierungsinformation zugeführt.

Vorteilhaft sind die Empfangskanäle der Detektoren im Bereich eines Stoßfängers des Kraftfahrzeugs angeordnet, wodurch eine optimale Detektion von solchen Hindernissen möglich ist, welche den Fahrweg eines Kraftfahrzeugs überspannen. Das Sichtfeld der Sensorik erfasst dadurch nämlich nicht nur das Umfeld über dem Kraftfahrzeug, sondern auch die über der Sensorik liegende Projektionsfläche des Kraftfahrzeugs, so dass nicht nur über dem Kraftfahrzeug liegende Hindernisse, sondern auch in die Projektionsfläche des Kraftfahrzeugs einragende Hindernisse detektiert werden.

Vorteilhaft ist für jede Fahrtrichtung ein mehrkanaliger Empfangssensor mit mehreren horizontal aufgereihten Empfangskanälen vorgesehen. Dabei ist ein erster Empfangssensor im Frontbereich des Kraftfahrzeugs, insbesondere in dem Stoßfänger des Frontbereichs, angeordnet. Ein weiterer Empfangssensor ist im Heckbereich des Kraftfahrzeugs angeordnet um die für die Assistenzfunktion benötigten Detektionsinformationen für Rückwärtsfahrten bereitzustellen. Der Empfangssensor im Heckbereich des Kraftfahrzeugs ist vorteilhaft ebenfalls in den Stoßfänger integriert.

Ausführungsbeispiele der Erfindung sind nachstehend anhand der Zeichnung näher erläutert. Es zeigen:
- Fig. 1:: eine perspektivische Darstellung eines Kraftfahrzeugs mit einem Fahrerassistenzsystem zur Umsetzung einer solchen Assistenzfunktion, welche auf die Detektion von Hindernissen, welche den Fahrweg eines Kraftfahrzeugs überspannen, bezogen ist,
- Fig. 2:: eine Prinzipskizze eines Ausführungsbeispiels eines Fahrerassistenzsystems, welches im Betrieb die Assistenzfunktion umsetzt, solche Hindernisse zu detektieren, welche den Fahrweg des Kraftfahrzeugs überspannen.

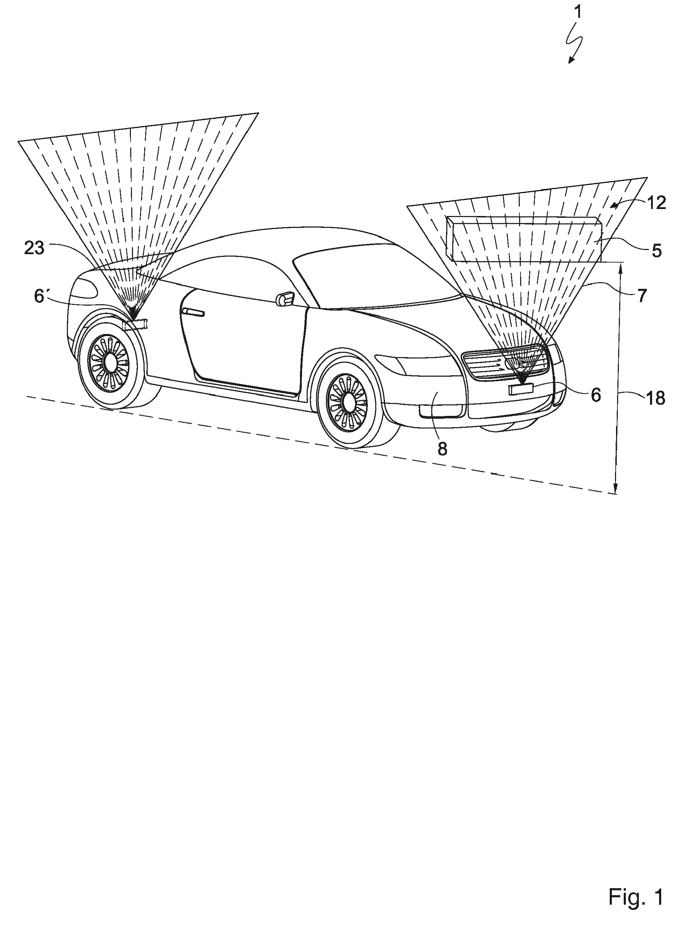

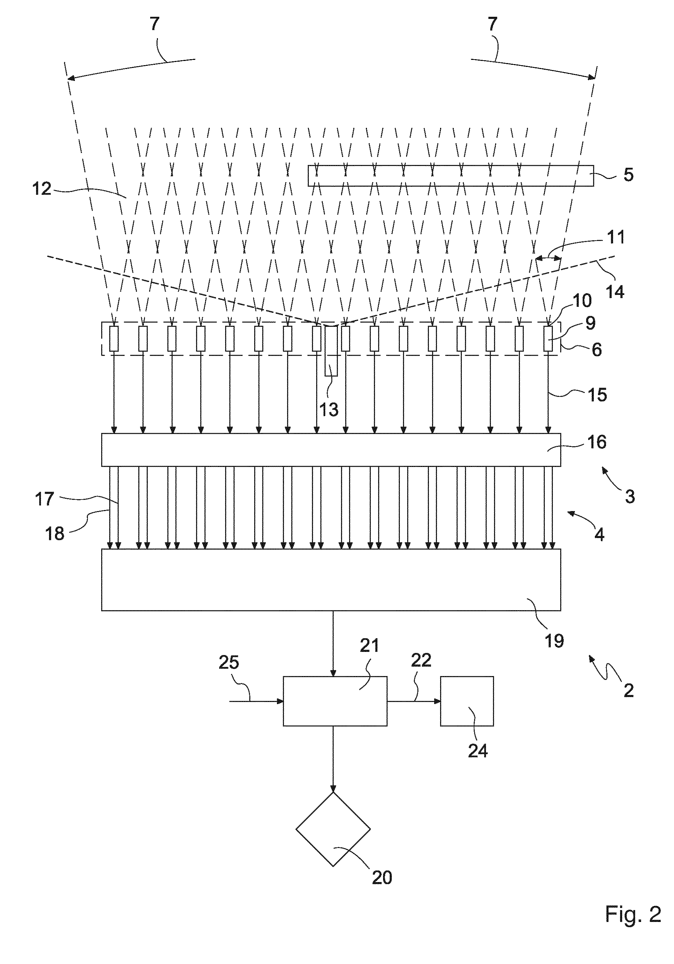

In Fig. 1 ist ein Kraftfahrzeug 1 mit einem nachstehend unter Einbeziehung von Fig. 2 näher erläutertes Fahrerassistenzsystem 2 dargestellt. Das Fahrerassistenzsystem 2 ist zur Umsetzung einer Assistenzfunktion ausgebildet, welche auf die Detektion von Hindernissen bezogen ist, die den Fahrweg des Kraftfahrzeugs 1 überspannen. Derartige Hindernisse sind insbesondere Durchfahrten wie Tunnel, beziehungsweise Tunneleinfahrten, oder auch für Autoverkehr vorgesehene Gebäude wie Garagen oder Parkhäuser. Derartige Objekte, welche von dem Fahrerassistenzsystem zu erkennen sind, können aber auch aus fremden Fahrzeugen hervorstehende Objekte sein, welche in den Fahrweg des Kraftfahrzeugs beziehungsweise die Projektionsfläche des Kraftfahrzeugs im Fahrweg, einragen und eine Kollisionsgefahr begründen können. Ein derartiges Objekt 5, welches den Fahrweg des Kraftfahrzeugs 1 überspannt, ist beispielhaft in Fig. 1 im Fahrweg des Kraftfahrzeugs 1 dargestellt.

Das Fahrerassistenzsystem 2 umfasst eine Sensorik 3 zur Ermittlung von Detektionsinformationen über Objekte 5 im Detektionsbereich, das heißt oberhalb des Kraftfahrzeugs 1. Zur Bereitstellung der Detektionsinformation 4 umfasst die Sensorik 3 einen mehrkanaligen Empfangssensor 6 mit einem senkrecht liegenden Sichtfeld 7.

Der mehrkanalige Empfangssensor 6 ist im Frontbereich des Kraftfahrzeug 1 angeordnet, nämlich im Stoßfänger 8. Im gezeigten Ausführungsbeispiel umfasst das Fahrerassistenzsystem 2 einen zweiten Empfangssensor im Heckbereich, welcher baugleich mit dem Empfangssensor 6 im Frontbereich ausgebildet ist. Der Empfangssensor im Heckbereich ist ebenfalls in den Stoßfänger integriert. Die Empfangssensoren 6 sind jeweils etwa mittig im Stoßfänger 8 derart angeordnet, dass sie mit ihren Detektoren 9 ein senkrecht zur Fahrzeugebene gerichtetes Sichtfeld 7 erfassen. Anders ausgedrückt sind die Empfangssensoren 6 nach oben gerichtet angeordnet, um den Bereich über der Sensorik beziehungsweise dem Kraftfahrzeug 1 zu detektieren.

Der mehrkanalige Empfangssensor 6 umfasst mehrere optoelektronische Detektoren 9, deren jeweilige Empfangskanäle 10 horizontal aufgereiht angeordnet sind. Unter horizontaler Anordnung ist dabei zu verstehen, dass die Empfangskanäle 10 auf einer Linie aufgereiht sind, welche parallel zur Fahrebene des Kraftfahrzeugs 1 liegt. Über ihren jeweiligen Empfangskanal 10 erfassen die optoelektronischen Detektoren 9 jeweils mit ihrem optischen Öffnungswinkel 11 einen Teil 12, beziehungsweise einen Teilsektor des gesamten Sichtfelds 7. Der Öffnungswinkel 11 ist dabei ein Azimutwinkel einer durch die Reihe der Empfangskanäle 11 bestimmten Ebene. Der Empfangssensor 6 ist dabei derart angeordnet, dass das Sichtfeld nicht horizontal liegt und vielmehr nach oben gerichtet ist. Zur Bestimmung eines geeigneten Öffnungswinkels 11 ist jedem Detektor 9 eine entsprechende Optik zugeordnet.

Die optoelektronischen Detektoren 9 sind Photodioden oder Avalanche-Dioden, welche bei Empfang elektromagnetischer Wellen ein entsprechendes elektrisches Signal erzeugen.

Die Sensorik 3 umfasst außerdem eine oder mehrere Leuchtdioden 13, welche den Detektionsbereich über dem Kraftfahrzeug 1 mit einem entsprechenden Beleuchtungssektor 14 beleuchten. Ein Objekt 5 im Beleuchtungssektor 14 reflektiert die auftreffenden Lichtstrahlen, wobei die entstehende Rückstreuung von einem oder mehreren Detektoren 9 erfasst wird. Die betreffenden Detektoren 9 erzeugen über ihren jeweiligen Empfangskanal 10 ein Empfangssignal mit einer der empfangenen Rückstreuung entsprechenden Empfangsinformation 15.

Im gezeigten Ausführungsbeispiel umfasst der Empfangssensor 6 sechzehn optoelektronische Detektoren 9 und entsprechend sechzehn Empfangskanäle 10. Die Empfangsinformationen 15 sämtlicher Empfangskanäle 10, welche die jeweils von dem betreffenden Detektor 9 empfangene Rückstreuung repräsentieren, werden mit geeigneten Algorithmen gemäß der sogenannten "LEDDAR"-Technologie ("Light-emitting diode detection and ranging") analysiert. Hierzu ist eine Auswertungseinheit 16 vorgesehen, welcher die Empfangsinformationen 15 für jeden Empfangskanal 10 separat eingegeben werden. Als Ausgang der Analyse der Empfangsinformation 15 wird eine dreidimensionale Detektionsinformation 4 ermittelt. Die Detektionsinformation 4 enthält dabei dreidimensionale Lageinformationen über das Objekt 5 in dem Sichtfeld 7, welche durch Analyse der Detektionsinformation, insbesondere unter Heranziehung der Detektionsinformation anderer Empfangskanäle, in zweidimensionale Informationen individualisierbar sind. Die Analyse gemäß der "LEDDAR"-Technologie erfolgt auf der Grundlage des Lichtlaufzeitprinzips oder der Phasenverschiebung. Als Detektionsinformation 4 werden aus den Empfangsinformationen 15 der horizontale Abstand 17 und der vertikale Abstand 18 eines detektierten Objekts 5 als Detektionsinformation 4 ermittelt. Der horizontale Abstand 17 und der vertikale Abstand 18 eines Objekts 5 ergeben sich aus der dreidimensionalen Lageinformation, welche bei der Analyse der Empfangsinformationen 15 gemäß der "LEDDAR"-Technologie her leitbar sind.

Die dreidimensionalen Detektionsinformationen, das heißt der horizontale Abstand 17 und der vertikale Abstand 18 eines Objekts 5 werden mit einer Zuordnung zu den jeweiligen Empfangskanälen 10 in einer virtuellen Umgebungskarte 19 abgespeichert. Die Empfangsinformationen 15 werden bei der laufenden Analyse sehr rasch kompiliert, wodurch eine rasche Folge von Aktualisierungen der Detektionsinformation 4 und damit einer Detektion mit hoher Auflösung gewährleistet ist.

Die virtuelle Umgebungskarte 19 wird einer Aktorik 20 des Fahrerassistenzsystems 2 bereitgestellt. Hierzu hat eine elektronische Steuereinheit 21 Zugriff auf die laufend aktualisierten Informationen der virtuellen Umgebungskarte 19.

Der Steuereinheit 21 wird entsprechend der spezifischen Assistenzfunktion des Fahrerassistenzsystems 2 eine Referenzinformation 22 zugeführt. In einem Ausführungsbeispiel der Erfindung umfasst die Referenzinformation 22 Informationen über die Höhe des Kraftfahrzeugs 1, so dass durch ein Vergleich der Referenzinformation mit dem detektierten vertikalen Abstand 18 eine Kollisionsgefährdung prognostiziert werden kann. Gleichfalls kann bei Erkennen von Gegenständen in den Detektionsbereich durch Bewertung der Detektionsinformation 4 unter Berücksichtigung der Referenzinformation 22 ermittelt werden, ob der in dem Detektionsbereich einragende Gegenstand ein Hindernis im Fahrweg des Kraftfahrzeugs 1 darstellt. Ein derartiger einragender Gegenstand könnte beispielsweise überstehende Lasten von fremden Fahrzeugen wie LKWs sein, beispielsweise Rohre oder Stangen und dergleichen. Im Fall einer positiven Detektion eines Hindernisses könnte bei einem aktiven Fahrerassistenzsystem in die dynamische Steuerung des Kraftfahrzeugs 1 unabhängig vom Fahrer eingegriffen werden.

Bei einer Verwendung des Fahrerassistenzsystems 2 zur Unterstützung eines Heckklappensystems wird der Steuereinheit 21 als Referenzinformation 22 beispielsweise der aktuelle Öffnungswinkel einer Heckklappe 23 des Kraftfahrzeugs 1 eingegeben. Aus dem Öffnungswinkel werden in einem Ausführungsbeispiel unter Berücksichtigung der gegebenen Geometrie der Heckklappe Rückschlüsse auf die Gesamthöhe des Kraftfahrzeugs 1 bei geöffneter Heckklappe 23 gezogen und einer Bewertung der Detektionsinformation 4 zugrunde gelegt sowie bedarfsweise die Aktorik 20 angesteuert.

In einem weiteren Ausführungsbeispiel wird anhand der Detektionsinformation 4 ein maximaler Öffnungswinkel der nach oben öffnenden Heckklappe 23 des Kraftfahrzeugs 1 ermittelt und einem Heckklappensystem 24 zur Verfügung gestellt. Das Heckklappensystem 24 ist dabei vorteilhaft derart ausgebildet, dass der Öffnungswinkel der Heckklappe unter Berücksichtigung des vertikalen Abstands 18 zu einem Objekt 5 über dem Kraftfahrzeug 1 begrenzt wird. Das Heckklappensystem 24 ist somit Teil der Aktorik 20 des Fahrerassistenzsystems 2.

Die Sensorik 3 wird in Abhängigkeit einer Aktivierungsinformation 25 aktiviert, nämlich in Abhängigkeit einer vorgegebenen Geschwindigkeit des Kraftfahrzeugs 1 oder bei Eintritt eines bestimmten, vorgegebenen Ereignisses. Die Aktivierungsinformation 25 wird der Steuereinheit 21 des Fahrerassistenzsystems 2 zugeführt, welche die Aktorik 20 unter Berücksichtigung der virtuellen Umgebungskarte 19 steuert.
In einem weiteren Ausführungsbeispiel wird die Aktorik 20 für die Ansteuerung einer Fahrzeugbeleuchtung eines Kraftfahrzeugs 1. Dabei ist eine Kopplung der Aktorik 20 des Fahrerassistenzsystems 2 mit einem Beleuchtungssensor der Fahrzeugbeleuchtung beziehungsweise die Berücksichtigung dessen Messergebnissen vorgesehen.

### Bezugszeichenliste

1. Kraftfahrzeug
2. Fahrerassistenzsystem
3. Sensorik
4. Detektionsinformation
5. Objekt
6. Empfangssensor
7. Sichtfeld (von 6)
8. Stoßfänger
9. Detektor
10. Empfangskanal
11. Öffnungswinkel
12. Teil (von 7)
13. Leuchtdioden
14. Beleuchtungssektor
15. Empfangsinformation
16. Auswertungseinheit
17. horizontaler Abstand
18. vertikaler Abstand
19. virtuelle Umgebungskarte
20. Aktorik
21. Steuereinheit
22. Referenzinformation
23. Heckklappe
24. Heckklappensystem
25. Aktivierungsinformation

## Patentansprüche

1. Verfahren zum Betrieb eines Fahrerassistenzsystems (2) zur Umsetzung einer solchen Assistenzfunktion, welche auf die Detektion von Hindernissen bezogen ist, die den Fahrweg eines Kraftfahrzeugs (1) überspannen, wobei mittels einer Sensorik (3) Detektionsinformationen (4) über Hindernisse in einem Detektionsbereich oberhalb der Sensorik (3) ermittelt und eine Aktorik (20) die Assistenzfunktion in Abhängigkeit der Detektionsinformation (4) der Sensorik (3) ausführt,
**dadurch gekennzeichnet, dass**
die Sensorik (3) das über ihr liegende Umfeld beleuchtet und mittels eines mehrkanaligen Empfangssensors (6) mit mehreren Horizontal aufgereihten Empfangskanälen (10) jeweiliger optoelektronischer Detektoren (9) welche jeweils mit ihrem optischen Öffnungswinkel (11) einen Teil (12) des gesamten Sichtfelds (7) des Empfangssensors (6) erfassen, an Objekten (5) reflektiertes Licht empfängt und die Detektoren (9) jeweils eine der empfangenen Rückstreuung entsprechende Empfangsinformation (15) bereitstellen, wobei eine Auswertungseinheit (16) aus den Empfangsinformationen (15) der Detektoren (9) dreidimensionale Detektionsinformationen (4) zu dem detektierten Objekt (5) ermittelt und der Aktorik (20) bereitstellt.

2. Verfahren nach Anspruch 1,
**dadurch gekennzeichnet, dass**
aus der Empfangsinformation (15) eines oder mehrerer Detektoren (9) der horizontale Abstand (17) und der vertikale Abstand (18) eines Objekts (5) als Detektionsinformation (4) ermittelt wird.

3. Verfahren nach Anspruch 1 oder 2,
**dadurch gekennzeichnet, dass**
die mit den dreidimensionalen Detektionsinformationen (4) der mehreren Detektoren (9) eine virtuelle Umgebungskarte (19) erzeugt und der Aktorik (20) bereitgestellt wird.

4. Verfahren nach einem der vorhergehenden Ansprüche,
**dadurch gekennzeichnet, dass**
die Sensorik (3) in Abhängigkeit einer vorgegebenen Geschwindigkeit des Kraftfahrzeugs (1) oder bei Eintritt eines bestimmten Ereignisses aktiviert wird.

5. Verfahren nach einem der vorhergehenden Ansprüche,
**dadurch gekennzeichnet, dass**
anhand der Detektionsinformation (4) ein maximaler Öffnungswinkel einer nach oben öffnenden Heckklappe (23) des Kraftfahrzeugs (1) ermittelt wird.

6. Fahrerassistenzsystem für Kraftfahrzeuge zur Umsetzung einer Assistenzfunktion, welche auf die Detektion von Hindernissen bezogen ist, die den Fahrweg des Kraftfahrzeugs (1) überspannen, mit einer Sensorik (3), welche zur Erfassung von Detektionsinformationen (4) über Hindernisse oberhalb der Sensorik (3) ausgebildet ist, und mit einer Aktorik (20), welche zur Ausführung der Assistenzfunktion unter Berücksichtigung der Detektionsinformation (15) ausgebildet ist,
**dadurch gekennzeichnet, dass**
die Sensorik (3) ein zur Beleuchtung des Umfelds angeordnetes Leuchtmittel (13) und einen mehrkanaligen optoelektronischen Empfangssensor (6) aufweist, welcher mehrere in horizontal aufgereihten Empfangskanälen (10) liegende und dabei mit ihrem jeweiligen Öffnungswinkel (11) einen Teil (12) des gesamten Sichtfelds (7) des Empfangssensors (6) erfassende optoelektronische Detektoren (9) zum Empfangen an Objekten (5) reflektierten Lichts und Bereitstellung der empfangenen Rückstreuung entsprechender Empfangsinformation (15) umfasst, und mit einer Auswertungseinheit (16), welche zur Ermittlung einer dreidimensionalen Detektionsinformation (4) zu dem detektierten Objekt (5) aus den Empfangsinformationen (15) der Detektoren (9) ausgebildet ist.

7. Fahrerassistenzsystem nach Anspruch 6,
**gekennzeichnet durch**
eine oder mehrere Leuchtdioden (13) als Leuchtmittel der Sensorik (3).

8. Fahrerassistenzsystem nach Anspruch 6 oder 7,
**gekennzeichnet durch**
eine Sensorik (3) mit 16 Empfangskanälen (10).

9. Kraftfahrzeug mit einem Fahrerassistenzsystem nach einem der Ansprüche 7 bis 9.

10. Kraftfahrzeug nach Anspruch 9,
**dadurch gekennzeichnet, dass**
die Empfangskanäle (10) der Sensorik (3) im Bereich eines Stoßfängers (8) des Kraftfahrzeugs (1) angeordnet sind.

11. Verwendung eines Verfahrens nach einem der Ansprüche 1 bis 5 oder eines Fahrerassistenzsystems (2) nach einem der Ansprüche 6 bis 8 für ein Heckklappensystem (24) eines Kraftfahrzeugs (1).

12. Verwendung eines Verfahrens nach einem der Ansprüche 1 bis 5 oder eines Fahrerassistenzsystems (2) nach einem der Ansprüche 6 bis 8 für die Ansteuerung einer Fahrzeugbeleuchtung eines Kraftfahrzeugs (1).
